# EUROPEAN PATENT APPLICATION

(11) **EP 3 767 570 A1**
(43) Date of publication of application: **20.01.2021**
(21) Application number: 19187158.1
(22) Date of filing: 18.07.2019
(51) Int. Cl.: G06Q 20/40

(54) **METHOD FOR INTEGRITY CONTROL OF AN ELECTRONIC TRANSACTION APPLICATION**

(71) Applicant: MasterCard International Incorporated, Purchase NY New York 10577-2509 (US)
(72) Inventor: GROARKE, Peter, Dublin, 15 (IE); NOWAK, Dawid, Dublin, 15 (IE); LENNON, Stephen, Dublin, D18 FX65 (IE); MAMADOU, Alpha Barry, Castleknock, 15 (IE)
(74) Representative: Murgitroyd & Company

(57) **Abstract**

Network latencies in electronic networks, and in particular in electronic financial networks, may be reduced by providing more local electronic facilities for generating the corresponding authorization responses, implemented in hardware and/or software applications. However, this requires a high degree of autonomy. The creator and/or maintainer of the software applications (typically a Card Scheme operator and/or an Issuer) may distribute software images to a local facility, but there is a high degree of risk that during unsupervised operation, the software images become outdated and/or corrupted. The software may even be deliberately modified to incorporate unauthorized changes
A computer-implemented method for integrity control of an electronic transaction application (300a) is provided - the electronic transaction application (300a) is associated with an authorizer (130), for providing a corresponding authorization response (320) to an authorization request (310). There is also a validation application (300b), associated with an integrity controller (110) for generating an expected authorization response (330) to the forwarded authorization request (325). And an application integrity detector (400) is provided for determining a degree of similarity between the forwarded authorization response (325) and the expected authorization request (330).

By providing the validation application, configured and arranged to operate in a similar (and predictable) way to the electronic transaction application, the integrity controller may regularly check for acceptable operation. The lowest degree of similarity that is considered acceptable may be determined by the integrity controller, considering parameters such as how the validation application is being used. This makes the method highly configurable. In addition, the forwarding of the requests and/or responses does not need to be synchronized to the steps of authorization, greatly reducing the effect of network latency on the Consumer (and authorizer) experience.

## Description

### FIELD

The present disclosure relates to a computer-implemented method for integrity control of an electronic transaction application.

### BACKGROUND

Electronic transactions, in particular electronic financial networks, use an electronic exchange of messages between parties associated with an electronic transaction, such as an electronic financial transaction network - for example, between a Merchant, an Acquirer, an Issuer and a Consumer (or Customer) - these are members of a four-party interchange model. The electronic network messages include a request for authorization and a corresponding authorization response - this may approve the request or disapprove (deny) the request.

Currently, many electronic financial transaction networks use a few electronic processing centers, and some use a single processing center, for authorizing transaction requests. As the parties involved in electronic financial transactions become more internationally distributed, network latency to and from the processing centers may increase, resulting in a degradation in the user experience. In particular, a degraded Consumer experience may increase resistance to using such an electronic financial network.

Network latency may be reduced by providing more local electronic facilities for generating the corresponding authorization responses, implemented in hardware and/or software applications. However, this requires a high degree of autonomy. The creator and/or maintainer of the software applications (typically a Card Scheme operator and/or an Issuer) may distribute software images to a local facility, but there is a high degree of risk that during unsupervised operation, the software images become outdated and/or corrupted. The software may even be deliberately modified to incorporate unauthorized changes.

It is an object of the invention to provide a high degree of autonomy for the authorization of electronic financial transactions, but residue the risk that fraudulent electronic financial transactions are authorized.

### GENERAL STATEMENTS

According to a first aspect of the present disclosure, there is provided a computer-implemented method for integrity control of an electronic transaction application, the electronic transaction application being comprised in an electronic transaction network; the electronic transaction application being associated with an authorizer and further configured and arranged to receive an authorization request and to provide a corresponding authorization response; the electronic transaction network further comprising: a validation application, associated with an integrity controller, and further configured and arranged to receive a forwarded authorization request and to generate an expected authorization response; an application integrity detector, associated with the integrity controller, further configured and arranged to receive a forwarded authorization response and the expected authorization request; the method comprising: receiving at the electronic transaction application the authorization request, forwarding the authorization request as the forwarded authorization request to the validation application, and providing the authorization response to a provider of the authorization request; receiving at the validation application the forwarded authorization request and forwarding the expected authorization response to the application integrity detector; forwarding the authorization response as the forwarded authorization response to the application integrity detector; and using the application integrity detector to determine a degree of similarity between the forwarded authorization response and the expected authorization response.

By providing the validation application, configured and arranged to operate in a similar (and predictable) way to the electronic transaction application, the integrity controller may regularly check for acceptable operation. The lowest degree of similarity that is considered acceptable may be determined by the integrity controller, considering parameters such as how the validation application is being used. This makes the method highly configurable. In addition, the forwarding of the requests and/or responses does not need to be synchronized to the steps of authorization, greatly reducing the effect of network latency on the Consumer (and authorizer) experience.

According to a further aspect of the current disclosure, the validation application is substantially the same as the electronic transaction application. Additionally or alternatively, the expected authorization response is substantially the same as the corresponding authorization response. Additionally or alternatively, the forwarded authorization request is substantially the same as the authorization request. Additionally or alternatively, the forwarded authorization response is substantially the same as the authorization response.

Advantageously, the degree of similarity in operation between the electronic transaction application and the validation application may be made very high. It may be more advantageous to use identical applications with identical requests and responses as that would simplify interpretation of the degree of similarity determined by the application integrity detector.

According to another aspect of the current disclosure, the authorization request is forwarded as the forwarded authorization request after providing the authorization response. Additionally or alternatively, the authorization response is forwarded as the forwarded authorization response after providing the authorization response.

The Consumer may prefer the experience of having the authorization response for the transaction be provided as quickly as possible, leaving requests and/or response being sent to validation application and/or application integrity detector to be forwarded later. In practice, even forwarding one or more requests and/or responses during the interaction of the Consumer with the authorizer is unlikely to affect the Consumer experience - the authorizer is simply forwarding the messages, and not waiting for any response or further approval.

According to a still further aspect of the current disclosure, the authorization request is forwarded as the forwarded authorization request by the authorizer and/or a provider of the authorization request. Additionally or alternatively, the authorization response is forwarded as the forwarded authorization response by the authorizer and/or a receiver of the authorization response.

In practice, the integrity controller may have different levels of trust with certain authorizers and/or certain providers of authorization requests (usually Merchants). In some situations, it may be easier to agree that one party provides all the messages, that each party provides one or more messages, or that each party provides all the messages. As the integrity detection is substantially asynchronous to the authorization of the electronic transaction, repeating a check or even comparing messages from different sources for the same electronic transaction may provide a lower risk of fraud.

According to yet another aspect of the current disclosure, the authorizer of electronic transactions is selected from the one or more of the following: an Issuer, a Merchant, an Acquirer, a network provider, a Scheme provider. Additionally or alternatively, the integrity controller is selected from the one or more of the following: an Issuer, an Acquirer, a network provider, a Scheme provider. Additionally or alternatively, the authorization request is provided by a Merchant or a Consumer.

By providing a higher degree of autonomy with a lower degree of risk of fraud, the strict separation of roles fulfilled by one or more parties associated with the financial network may be reduced, allowing parties to provide services as more than one role.

According to another aspect of the current disclosure, the authorization request is provided by the integrity controller. Additionally or alternatively, the authorization request is forwarded as the forwarded authorization request by the authorizer and/or the integrity controller. Additionally or alternatively, the authorization response is forwarded as the forwarded authorization response by the authorizer and/or the integrity controller.

This may be advantageous as it allows the integrity controller to check the operation of the electronic transaction application by initiating a "dummy" transaction. For example, the integrity controller may present themselves as a Merchant. For example, a low value transaction (1 EURO or less) may be initiated - even if the authorizer knew that the integrity controller performed such checks, it would be difficult for them to influence the electronic transaction in any way to evade the check. In addition, the integrity controller has a high degree of control over the messages during this "dummy" electronic transaction, allowing very specific and very detailed checks to be made.

According to a further aspect of the current disclosure, the method further comprises: providing the degree of similarity to one or more of the following: the authorizer, an Issuer, a Merchant, an Acquirer, a Consumer, a network provider, a Scheme provider.

It may be advantageous to provide the degree of similarity detected to one or more of the parties so that they can improve their own procedures, protocols and systems themselves.

### BRIEF DESCRIPTION OF THE DRAWINGS

Features and advantages of some embodiments of the present invention, and the manner in which the same are accomplished, will become more readily apparent upon consideration of the following detailed description of the invention taken in conjunction with the accompanying drawings, which illustrate preferred and exemplary embodiments and which are not necessarily drawn to scale, wherein:
FIG. 1 depicts a first embodiment of an improved electronic transaction network;
FIG. 2A, 2B and 2C show an improved method for integrity control of an electronic transaction application;
FIG. 3 depicts a second embodiment of an improved electronic transaction network;
FIG. 4 show a further improved method for integrity control of an electronic transaction application; and
FIG. 5 depicts a sequence diagram for another improved method for integrity control of an electronic transaction application.

### DETAILED DESCRIPTION

In the following detailed description, numerous non-limiting specific details are given to assist in understanding this disclosure. It will be obvious to a person skilled in the art that the method may be implemented on any type of standalone system or client-server compatible system containing any type of client, network, server, and database elements. Storage may be performed using any suitably-configurable computer memory.

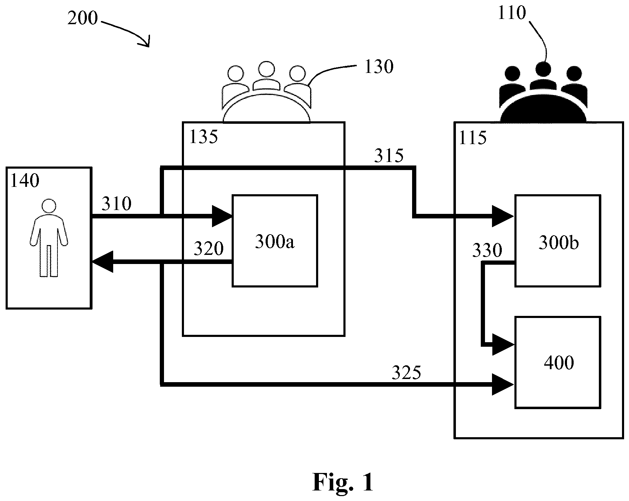

FIG. 1 depicts a first embodiment of an improved electronic transaction network 200, associated with one or more parties. It is configured and arranged to perform one or more electronic transactions, for example one or more electronic transaction - in this case, the parties comprise at least:
- a provider 140 of a primary authorization request 310, such as a Merchant or Retailer
- a Consumer (or Purchaser or Customer or Cardholder) - not depicted in the figures.
- an authorizer 130, such as an Acquirer 130. The authorizer 130 may receive an authorization request 310 from one or more parties, such one or more Merchants - the Consumer participates in the methods described herein through a Merchant. In some configurations, the authorizer may receive authorization requests directly from one or more Consumers;
- an integrity controller 110, who is a party interested in detecting (and possibly preventing) electronic transactions with a high degree of risk, or even fraudulent electronic transactions. Risk and fraud are particularly important if the electronic transactions are, for example an electronic financial transaction. For example, the integrity controller 110 may be an Issuer, such as a bank, a Card Scheme operator and/or a network operator.

To accept payment, a provider 140 of a primary authorization request 310, such as a Merchant 140, must normally establish an account with an institution, such as a financial institution, that is the authorizer 130 in the electronic financial transaction network 200. Such a financial institution is usually called the "merchant bank," the "acquiring bank," or the Acquirer. Other names include a "merchant processor," an "acquiring processor," or a "third party processor". When a financial transaction is being initiated, the provider 140 requests authorization from the authorizer 130 for the amount of the purchase by providing a primary authorization request 310.

Initiating and completing electronic transactions, and in particular electronic financial transactions, require the exchange of electronic messages relating to the electronic transactions over the electronic transaction network 200. In addition, the ability to offer related services requires the exchange of further electronic messages between the associated parties.

For financial transactions, these messages are at least partially standardized and formalised - these standard specifications and protocols are managed by relevant bodies like, for example:
- EMVCo LLC (EMV), who make them available at www.emvco.com; and
- ISO, who make them available at www.iso.org

For example, ISO 8583 "Financial transaction card originated messages - Interchange message specifications" specifies an interface enabling messages to be exchanged between computer systems connected to such a financial transaction network 200.

For example, ISO 7812 "A numbering system for the identification of the card issuers, the format of the issuer identification number (IIN) and the primary account number (PAN)" specifies PAN parameters which may be carried in an authorisation request 310 in such a financial transaction network 200.

For example, 3DS (3-D Secure) is a protocol which provides an additional security layer for support app-based authentication and integration with digital wallets, as well as traditional browser-based e-commerce transactions. It is managed by the EMV, and the latest version if found at: www.emvco.com/emv-technologies/3d-secure/

The authorizer 130 may provide an authorizer software environment 135, comprising one or more computer-implemented applications which may be executed on computer hardware.

In conventional networks, software applications 135 of the authorize 130 may need to communicate with applications comprised in the software environment of an Issuer and/or Card Scheme operator to determine whether the relevant account is in good standing and whether the purchase is covered by Consumer's available credit line. Based on these determinations, the primary authorization request 310 will be declined or accepted. If the request is accepted, an authorization code is issued as a primary authorization response 320. This response 320 is usually provided to at least the party who provided the primary authorization request 310, directly and/or indirectly.

As depicted, the authorizer software environment 135 comprises one or more computer-implemented financial transaction applications 300a, associated with (operated under their responsibility) the authorizer 130. The financial transaction application 300a is configured and arranged to receive a primary authorization request 310 and to generate a corresponding primary authorization response 320, which is provided to at least the party who provided the primary authorization request 310. In this context, "primary" is used to indicate that this is the original message, and not a forwarded message as described below.

The financial transaction network 200 further comprises:
- a computer-implemented validation application 300b, associated with the integrity controller 110. The validation application 300b is configured and arranged to receive a forwarded authorization request 315, and to generate an expected authorization response 330. As described below, the primary authorization request 310 is forwarded by one or more parties as the forwarded authorization request 315 to the validation application 300b; and
- a computer-implemented application integrity detector 400, also associated with the integrity controller 110. The application integrity detector 400 is configured and arranged to receive a forwarded authorization response 325 and the expected authorization request 330. As described below, the primary authorization response 320 is forwarded by one or more parties as the forwarded authorization response 320 to the application integrity detector 400.

Although described as separate modules, the validation application 300b and the application integrity detector 400 may be two or more software applications or combined in a single software applications. The functionality described may be implemented in software and/or hardware. The software part is comprised in an integrity controller software 115.

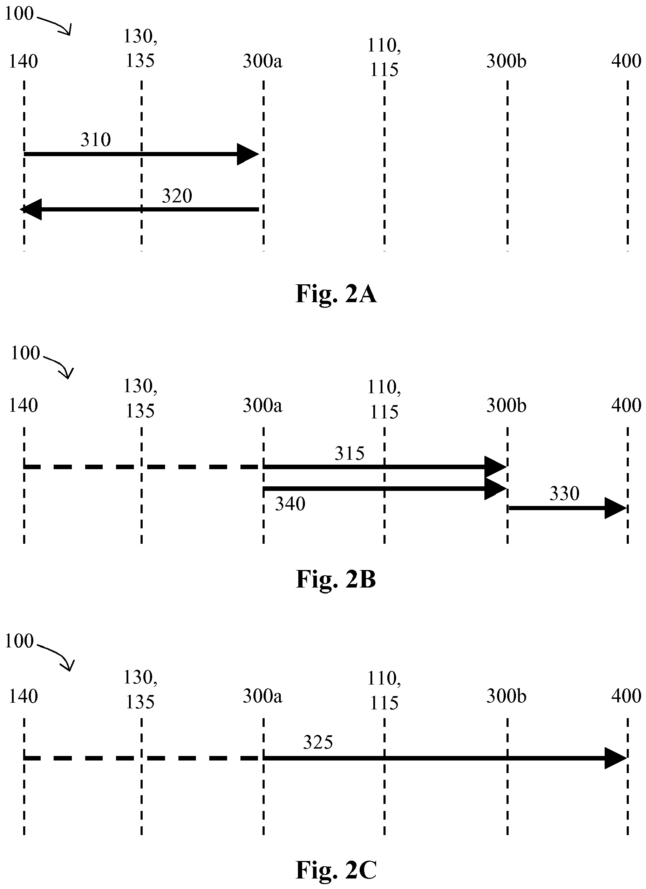

FIG. 2A, 2B and 2C show an improved method 100 for integrity control of a financial transaction application 300a, comprised within the financial transaction network 200 depicted in FIG. 1.

The vertical dotted lines represent different parties and/or different nodes. From left to right:
140: the provider of a primary authorization request 310 (or request provider);
130, 135: the authorizer, the authorizer software environment;
300a: the financial transaction application;
110, 115: the integrity controller, the integrity controller software environment;
300b: the validation application; and
400: application integrity detector.

The horizontal lines arrows indicate the node/party which originates the message (start of the arrow) and the node/party which receives the message (end of the arrow). The timing sequence is depicted from top to bottom,

FIG. 2A depicts the financial transaction authorization, which in general is prioritized. A primary authorization request 310 is provided by the request provider 140, and received by the financial transaction application 300a. Sometime after receipt, the financial transaction application 300a generates a primary authorization response 320 corresponding to the primary authorization request 310, either approving the request or disapproving (deny) the request. Sometime after generation, the primary authorization response 320 is provided to the request provider 140.

FIG. 2B depicts the forwarding of the authorization request message 310 to the integrity controller 110, which may occur after the event depicted in FIG. 2A, or substantially simultaneously. At substantially the same time as, or sometime after, generation of the primary authorization request 310, it is forwarded as forwarded authorization request 315 to the verification application 300b. As indicated by the dotted line, it may be provided by the originator 310 of the primary authorization request 310, the authorizer software environment 135, the financial transaction application 300a and any combination thereof. Substantially the same message may be forwarded by different parties and/or similar messages derived from the primary authorization request 310.

The forwarded authorization request 315 is received by the verification application 300b. Sometime after receipt, the verification application 300b generates an expected authorization response 330 corresponding to the forwarded authorization request 310, and appearing to be either approving the request or disapproving (deny) the request. In other words, expected authorization response 330 represents a prediction of what the primary authorization response 320 generated by the financial transaction 300a will be (or is).

Sometime after generation, the expected authorization response 330 is provided to the application integrity detector 400.

FIG. 2C depicts the forwarding of the authorization response message 320 to the integrity controller 110, which may occur after the event depicted in FIG. 2A, or substantially simultaneously. At substantially the same time as, or sometime after, generation of the primary authorization response 320, it is forwarded as forwarded authorization response 320 to the application integrity detector 400. As indicated by the dotted line, it may be provided by the originator 300a of the primary authorization response 320 (the financial transaction application 300a), the authorizer software environment 135, the receiver 140 of the primary authorization response 320 (the request provider 140), and any combination thereof. Substantially the same message may be forwarded by different parties and/or similar messages derived from the primary authorization response 320.

The forwarded authorization response 325 is received by the application integrity detector 400. Sometime after receipt, the application integrity detector 400 determines a degree of similarity between the forwarded authorization response 325 and the expected authorization response 330.

The financial transaction network 200 may be a wholly or partially dedicated network, although increasingly it is distributed on-line, allowing virtual access from all over the world.

The invention is based upon several insights, including the insight that in some cases fraud may be preventable by providing substantially asynchronous monitoring of a locally (local to the request provider 140) operated financial transaction software applications 300a. Traditional efforts have concentrated on centralizing authorization facilities - while this may provide a very high chance of detecting each fraudulent attempt to initiate a financial transaction, introducing delay makes these options less attractive, particularly during interactions with a Consumer.,. The reduction in network latency increases the likelihood that the methods described herein will be used regularly.

The creator (or distributor or author) of the financial transaction software application 300a has a high degree of freedom to configure and arrange the method and the hardware/software modules and components, depending on the level of trust between the authorizer 130 and the application integrity controller 110.

For example, the number of checks and the time between checks may be set accordingly. For a highly trusted authorizer 130, it may not be necessary to forward every primary authorization request 310 and every primary authorization response 320. Or the application integrity controller 110 may only receive (and optionally store) the forwarded requests 315 and responses 325, but choose not to determine the degree of similarity. Or it may determine the degree of similarity for substantially each forwarded request 315 and response 325, but limit any further actions. Additionally or alternatively, one or more additional messages directly between the financial transaction application 300a and/or the authorizer software environment 135, and the application integrity controller 110. In the case of a high degree of trust, a plurality of additional messages may be generated at frequent points in time.

For a less trusted authorizer, it may advantageous to forward substantially each primary authorization request 310 and substantially each primary authorization response 320, and to check the integrity of each message. If a high degree of similarity is maintained for a certain period, it may be advantageous to consequently increase the degree of trust associated with the authorizer 130. With a less trusted authorizer 130, additional messages from the financial transaction application 300a and/or the authorizer software environment 135 are less likely to be permitted by the authorizer 130, and the application integrity controller 110 may be restricted to only the externally-accessible messages (here, at least the primary authorization request 310 and the primary authorization response 320).

Additionally or alternatively, the number of checks may be increased or the time between checks reduced if a new version of the financial transaction application 300a has been made available. This may reduce the risk that financial transactions are authorized using an outdated application.

The application integrity controller 110 has a high degree of freedom to configure and arrange the method and the network to provide a high degree of similarity in operation between the one or more financial transaction applications 300a and the validation application 300b. A high degree of similarity may simplify interpretation of the degree of similarity determined by the application integrity detector 400 - a lower degree of similarity may require additional analysis.

For example,
- the validation application 300b may be substantially the same as the financial transaction application 300a. In other words, the software is substantially identical. For a creator (or author or distributor) of financial transaction application 300a, this is highly advantageous as it reduces the need to have multiple versions of the same software application. However, in cases where the financial transaction applications 300a is highly complex and/or expensive to operate (for example, due to licenses or hardware requirements), it may be advantageous to create (or author) a dedicated validation application 300b that is configured and arranged to only generate the same responses as would be generated by the financial transaction application 300a. Additionally or alternatively, it may comprise a computer-implemented database of expected responses, and the forwarded authorization request 315 is used to access the correct entry in the database.
- the expected authorization response 330 may be substantially the same as the corresponding primary authorization response 320. Although this may require a more complex validation application 300b, this may reduce the complexity of the application integrity detector 400.
- the forwarded authorization request 315 may be substantially the same as the primary authorization request 310. This may reduce the complexity of the software environment that forwards the message, as less processing power is required. Alternatively, the forwarded authorization request 315 may be a subset of parameters carried by the primary authorization request 310, one or more portions (or records or fields) of the primary authorization request 310, a representation of the primary authorization request 310, and any combination thereof.
- the forwarded authorization response 325 may be substantially the same as the primary authorization response 320. This may reduce the complexity of the software environment that forwards the message, as less processing power is required. Alternatively, the forwarded authorization response 325 may be a subset of parameters carried by the primary authorization response 320, one or more portions (or records or fields) of the primary authorization response 320, a representation of the primary authorization response 320, and any combination thereof.

As indicated, subsets and/or representations may be used for one or more of the messages indicated. For example:
- The request provider 140, such as a Merchant, generates a primary authorization request 310 comprising parameters such as PAN (Primary Account Number), amount, merchant name, Cardholder name as, for example, separate fields.
- This primary authorization request 310 sends to the authorizer 130, such as an Acquirer.
- The authorizer software environment 135 receives the primary authorization request 310, and passes only the subset of fields to the financial transaction application 300a that are necessary to generate the primary authorization response 320 (authorization request*). For example, PAN, amount and currency. Alternatively, the authorizer software environment 135 may pass the primary authorization request 310 to the financial transaction application 300a (as depicted in FIG. 2A) which may be configured and arranged to ignore any unnecessary parameters and/or fields and/or bits.
- The financial transaction application 300a, for example a Mastercard Application/service, processes the authorization request*, and generates the primary authorization response 320.
- The authorizer software environment 135 receives the primary authorization response 320, and passes only the subset of fields (authorization response*) to the request provider 140 that are necessary to authorize or deny the primary authorization request 310. Alternatively, the authorizer software environment 135 may pass the primary authorization response 320 to the request provider (as depicted in FIG. 2A) which may be configured and arranged to ignore any unnecessary parameters and/or fields and/or bits.
   This completes the handling of the primary authorization request 310, and this is prioritized - in other words, it is handled as quickly as possible to reduce the risk that the Customer experience is degraded due to longer waiting times.
- Either before, after, or substantially simultaneously with providing the authorization response (primary authorization response 320 or authorization response*) to the request provider 140:
   ∘ the primary authorization request 310 is forwarded as the forwarded authorization request 315; and
   ∘ authorization response 320 is forwarded as the forwarded authorization response 325.
- The financial transaction application 300a forwards primarily the subset of fields to the validation application 300b that are necessary to generate the expected authorization response 330 (forwarded authorization request 315). For example, PAN, amount and currency. Alternatively or additionally, the authorizer software environment 135 (or the financial transaction application 300a) may forward 315 the primary authorization request 310 to the validation application 300a (as depicted in FIG. 2B) which may be configured and arranged to ignore any unnecessary parameters and/or fields and/or bits.
- The forwarded authorization request 315 may be a representation (for example a recoding and/or encoding and/or encryption) of the primary authorization request 310.
- Optionally, one or more additional messages 340 may be sent to the validation application 300b, comprising one or more characteristics of the financial transaction application 300a such as one or more hash functions, checksums, check digits, fingerprints, randomization functions, error-correcting codes, ciphers and any combination thereof.

Encryption of the one or more additional messages 340 and/or forwarded authorization request 315 may be advantageous to ensure data message security and/or integrity, and to reduce the risk that the financial transaction application 300a and/or authorizer software environment 135 are modified in an unauthorized way to provide "fake" messages to the integrity controller 110 to hide modifications made to the financial transaction application 300a - for example, messages in a format that the integrity controller 110 can decode, but that the authorizer 130 cannot decode. This may be particularly useful if there is a low level of trust between the authorizer 130 and the integrity controller 110.
- For example, the financial transaction application 300a may be configured and arranged to generate a hash using a secure key provisioned when the financial transaction application 300a was deployed, and to forward this as a forwarded authorization request (FAR) 340 - in this example, FAR (key, message) = HMAC (Key, message). Additionally or alternatively, an additional message generator application (not depicted) may be used.
- The skilled person will realize that any convenient types of message contents may be used for the forwarded authorization request 315 and/or one or more additional message 340, such as:
   ∘ message = primary authorization request 310
   ∘ message = authorization request* (a subset)
   ∘ message = primary authorization response 320
   ∘ message = authorization response* (a subset)
   ∘ message = primary authorization request 310, primary authorization response 320
   ∘ message = authorization request*, primary authorization response 320
   ∘ message = primary authorization request 310, authorization response*
   ∘ message = primary authorization*, authorization response*
- The key may be stored in any convenient computer-memory, accessible to the financial transaction application 300a.
- In this encrypted example, the authorizer 130 (either the authorizer software environment 135 and/or the financial transaction application 300a) sends the FAR (key, message) 340 substantially asynchronously to the validation application 300b.
- As described above, the request provider 140, authorizer software environment 130, and/or financial transaction application 300a may forward 325 the primary authorization response 320 or authorization response*. Even if the authorizer software environment 130 and/or request provider 140 has forwarded the response 320 in some form or representation, it may be advantageous for the financial transaction application 300a, to also forward the primary authorization response 320 that was generated (or only a subset of fields or a suitable representation) substantially asynchronously to the validation application 300b as the contents of the messages may be different.
- As described above, the request provider 140, authorizer software environment 130, and/or financial transaction application 300a may forward 315 the primary authorization request 310 or authorization request*. Even if the authorizer software environment 130 and/or financial transaction application 300a has forwarded the request 310 in some form or representation, it may be advantageous for the request provider 140, such as a Merchant, to also forward the primary authorization request 310 that they generated (or only a subset of fields or a suitable representation) substantially asynchronously to the application integrity detector 400 as the contents of the messages may be different.
- The validation application 300b then generates the expected authorization response 330 in a similar way, or preferably substantially the same way, as the financial transaction application 300a.
- In this encrypted example, the validation application 300b may be further configured and arranged to decrypt the authorization request portion of the FAR (key, message) 340, and to use this to generate a corresponding expected authorization response 330. Alternatively or additionally, any authorization request forwarded by the request provider 140 may be used for the generation.
- The expected authorization response 330 is then compared by the application integrity detector 400 to the forwarded authorization response 325 to determine a degree of similarity.
- In this encrypted example, the application integrity detector 400 may be further configured and arranged to decrypt the authorization response portion of the FAR (key, message) 340, and to use this to for the comparison. Alternatively or additionally, any authorization response forwarded by the request provider 140 may be used for the comparison.
- Optionally, the validation application 300b may be configured and arranged to generate a hash using the same secure key as was used by the financial transaction application 300a to generate FAR (key, message) = HMAC (Key, message).
- The expected authorization response 330 would similarly be EAR (key, message) = HMAC (Key, message)
- The degree of similarity may then be determined by comparing FAR (key, message) and EAR (key, message).

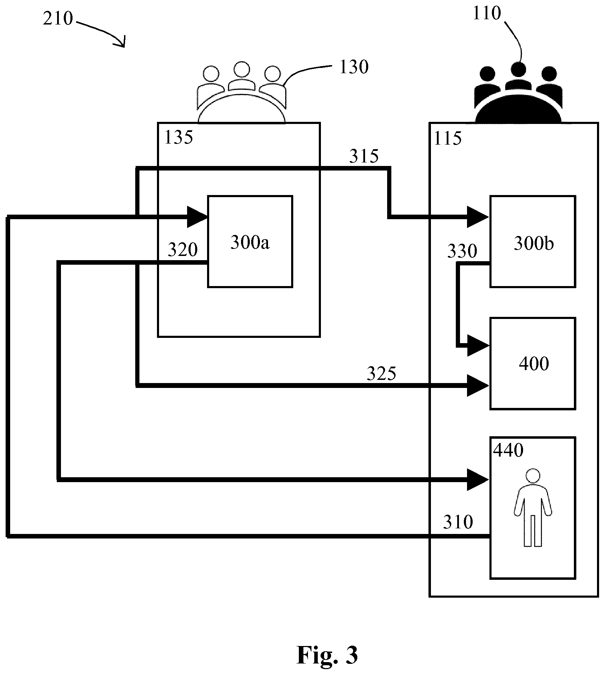

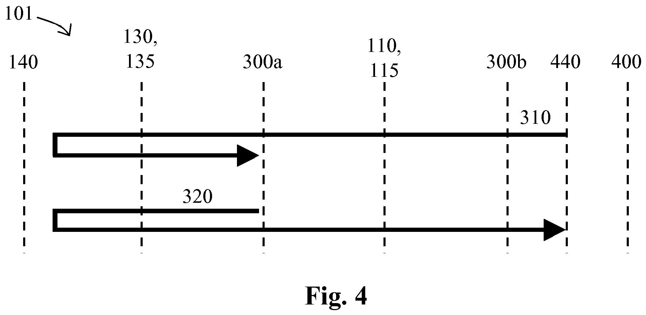

FIG. 3 depicts a second embodiment of an improved financial transaction network 201, which allows a further improved method for integrity control of a financial transaction application 101 depicted in FIG. 4

FIG. 3 is the same as FIG .1, except for the provider 440 of the authorization request 310 being associated with the integrity controller 110 (an integrity request provider 440). In other words, the integrity controller 110 may present themselves as a different party in the financial network 201 to allow them to check the integrity of the financial transaction application 300a at a moment that they can choose. For example, the integrity controller may present themselves as a Merchant. For example, a low value transaction (1 EURO or less) may be initiated by the application integrity controller 110.

The frequency of using this method to initiate a "dummy" financial transaction may depend on factors such as the degree of trust between the application integrity controller 110 and the authorizer 130. Even if the authorizer 130 knew that the integrity controller 110 performed such checks, it would be difficult for them to detect and possibly influence this particular financial transaction to evade and/or manipulate the results of the check.

FIG. 4 depicts the same message sequence diagram depicted in FIG. 2A, except that the request provider 440 is associated with the application integrity controller 110, but appears to the authorizer 130 as further provider 140 as described above. The primary authorization request 320 is forwarded to the integrity request provider 440.

Additionally or alternatively, the primary authorization request 310 may be forwarded by the integrity request provider 440 directly to the validation application 300b, as both are associated with the integrity controller.

Additionally or alternatively, the authorization response 320 received by the integrity request provider 440 may be forwarded directly to the application integrity detector 400, as both are associated with the integrity controller.

Being able to generate a "dummy" transaction provides the integrity controller 110 with a high degree of control over the messages, allowing very specific and very detailed checks to be made of the financial transaction application 300a. It may also be used for checking the accuracy and reliability of the forwarding protocols of the request and/or response messages.

As mentioned above, the network facilities and messages are preferably at least partially standardized to allow for a high degree of interconnectability, allowing parties from different global locations to be associated with the improved financial transaction networks 200, 201.

The skilled person will realise that the networks 200, 201 may be further configured and arranged to comprise a plurality of financial transaction applications 300a being compared to corresponding validation applications 300b by the same integrity controller 110. A plurality of authorizers 130 may be checked by the same integrity controller. Similarly, the same authorizer 130 may be checked by a plurality of integrity controllers 110.

Similarly, the same financial transaction application 300a may be checked by a plurality of validation applications 300b. Or the same validation application 300b may check a plurality of financial transaction application 300a.

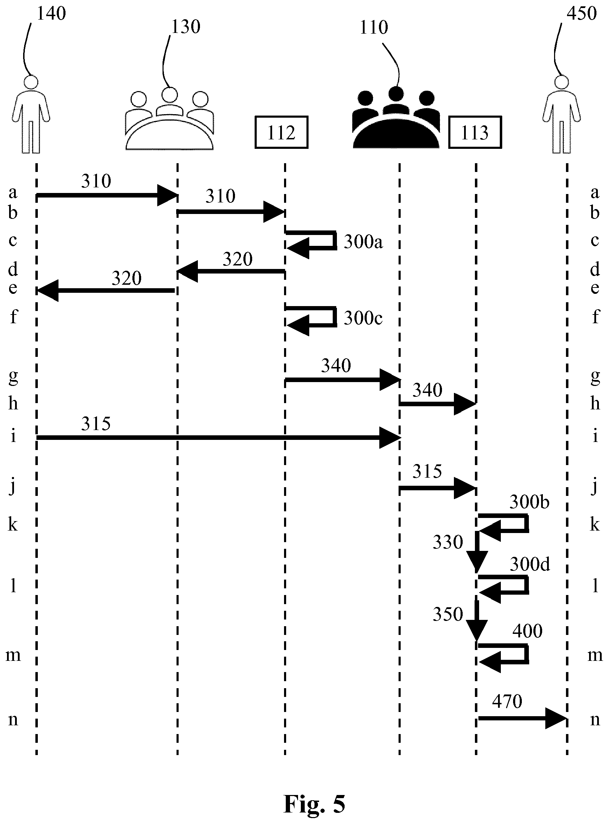

FIG. 5 depicts a sequence diagram for another example of an improved method for integrity control of a financial transaction application - it combines features depicted and described above in relation to FIG. 1, 2, 3 and 4.

FIG. 5 shows examples of signals and messages which may be sent and received during execution of the computer-implemented method. The transmitters and receivers of the signals and messages are parties and/or nodes, depicted from left to right as:
- a provider 140 of a primary authorization request 310, such as a Merchant 140,
- an authorizer 130, such as an Acquirer 130,
- a transaction server 112, authorized and/or provided by an integrity controller 110, such as a Card Scheme operator 110, located (physically and/or virtually) on-premise at the Acquirer 130,
- the integrity controller 110 (Card Scheme operator 110),
- a validation server 113, authorized and/or provided by the Card Scheme operator 110, located (physically and/or virtually) on-premise at the Card Scheme operator 110, and
- an application integrity enforcer 450, such as a legal department of the integrity controller 110.

From top to bottom, an example of a signal and message sequence are depicted. Although depicted sequentially, the skilled person will realize that one or more of the steps may be performed substantially simultaneously, repeated and/or sent to one or more alternative or additional parties and/or nodes. Only steps that are directly dependent on an earlier step require a fixed order of execution.

The signal and message sequence shown is:
- step a: the Merchant 140 provides a primary authorization request 310 to the Acquirer 130, for example,
   T(PAN, Amount, Name, Currency, etc.)

In other words, the merchant is creating a transaction T which may have parameters such as PAN, amount, merchant name, cardholder name, etc.
- step b: the Acquirer 130 passes the primary authorization request 310 to the transaction server 112. The request 310 may be passed substantially unchanged or optionally, a subset of the parameters and/or fields may be forwarded 310, for example, S(T)(PAN, Amount, Currency).
- step c: the transaction server 112 processes the subset S(T) and generates the result R(T) using a computer-implemented financial transaction application 300a.
- step d: the result R(T) is provided from the transaction server 112 to the Acquirer 130 as a primary authorization response 320.
- step e: this primary authorization response 320 is provided by the Acquirer 130 to the Merchant 140. Alternatively or additionally, the primary authorization response 320 may be provided directly from the transaction server 112 to the Merchant 140. By including the Acquirer 130 as an intermediate node 130, the Acquirer 130 may perform additional monitoring and/or modification of the response 320. Preferably, the primary authorization response 320 provided to the Merchant 140 resembles and/or emulates a conventional and/or expected primary authorization response 320. For at least the Merchant 140, the financial transaction appears to be completed with this step - preferably, the Acquirer 130 and/or transaction server 112 returns the R(T) response 320 to the Merchant 140 as quickly as possible to reduce the risk that the Customer experience is degraded.
- step f: the transaction server 112 creates one or more additional messages 340 using a computer-implemented additional message generator application 300c. These may be generated substantially simultaneously with the processing of the financial transaction and/or at some time period afterwards. Additionally or alternatively, the transaction application 300a may be configured and arranged to generate one or more additional messages 340. In this example, the one or more additional messages 340 comprises a forwarded authorization request (FAR) using the subset S(T), and the additional message generator 300c generates the result R(T), for example:
   H1(K, T) = HMAC(K1, (S(T), R(T))
- step g: the transaction server 112 passes the one or more additional messages 340 to the integrity controller 110. The one or more additional messages 340 may be passed substantially unchanged or optionally, a subset of the parameters and/or fields may be forwarded 340.
- step h: the one or more additional messages 340 are provided by the integrity controller 110 to the validation server 113, for example:
   H1(K, T)

Alternatively or additionally, one or more additional messages 340 may be provided directly from the transaction server 112 to the validation server 113. By including the integrity controller 110 as an intermediate node 130, the integrity controller 110 may perform additional monitoring and/or modify one or more additional messages 340.
- step i: the Merchant or Retailer 140 forwards the primary authorization response 320 to the integrity controller 110 as a primary authorization response message 325, for example:
   T

Additionally or alternatively, other nodes receiving and/or generating the primary authorization response 320 may forward the primary authorization response 320 to the integrity controller 110 as a primary authorization response message 325. These include the transaction server 112 and the Acquirer 130.
- step j: the integrity controller 110 passes the primary authorization response message 325 to the validation server 113. The response 325 may be passed substantially unchanged, for example:
   T

Optionally, a subset of the parameters and/or fields may be forwarded 325.
- step k: the validation server 113 comprises a computer-implemented validation application 300b, configured and arranged to generate an expected authorization response 330, analogous to the process followed in step c, based on the data received T. For example:
   ER(T)
- step 1: the validation server 113 comprises a computer-implemented expected additional message validation application 300d, configured and arranged to generate one or more expected additional messages 350. Additionally or alternatively, the validation application 300b may be configured and arranged to generate one or more expected additional messages 350. In this example, the one or more expected additional messages 350 comprises a forwarded authorization request (FAR) using the subset S(T), analogous to the process followed in step f, for example:
   H2(K, T) = HMAC(K1, (S(T), R(T))
- step m: the validation server 113 comprises a computer-implemented application integrity detector 400, configured and arranged to receive the expected additional message 350 and the forwarded additional message 340, and to compare them.
- step n: optionally, if the expected additional message 350 and the forwarded additional message 340 differ too much, an application integrity message 470 may be sent to the application integrity enforcer 450, who may in turn, take appropriate action. Additionally or alternatively, the messages may be stored for analysis.

The improved financial transaction methods 100, 101 may further comprise providing the degree of similarity to one or more of the following: an authorizer 130, an Issuer 110, a Merchant 140, 440, an Acquirer 130, a Consumer, a network provider 200, 201, a Scheme provider 110, and any combination thereof.

One or more of these parties may wish to know the results as this may also be used as a measure of the trust level of party, such as the authorizer 130, and/or the request provider 140 described above. The method may be further modified to provide an application integrity message 470, with appropriate details and at appropriate moments in time.

Although the present invention has been described in connection with specific exemplary embodiments, it should be understood that various changes, substitutions, and alterations apparent to those skilled in the art can be made to the disclosed embodiments without departing from the spirit and scope of the invention as set forth in the appended claims.

### REFERENCE NUMBERS USED IN THE DRAWINGS

100 Improved method for integrity control of an electronic transaction application
101 Further improved method for integrity control of an electronic transaction application
110 Integrity controller (e.g. a Card Scheme operator)
112 Transaction server
113 Validation server
115 Integrity controller software environment
130 Authoriser (e.g. an Acquirer or Acquiring bank)
135 Authorizer software environment
140 Provider of a primary authorization request (e.g. a Merchant or Retailer)
200 First embodiment of an improved electronic transaction network
201 Second embodiment of an improved electronic transaction network
300a Electronic transaction application
300b Validation application
300c Additional message generator
300d Additional message validation application
310 Primary authorization request
315 Forwarded authorization request message
320 Primary authorisation response
325 Forwarded authorisation response message
330 Expected authorisation response
340 Additional message
350 Expected additional message
400 Application integrity detector
440 Application integrity request provider
450 Application integrity enforcer
470 Application integrity message

## Claims

1. A computer-implemented method (100, 101) for integrity control of an electronic transaction application (300a), the electronic transaction application (300a) being comprised in an electronic transaction network (200, 201);
the electronic transaction application (300a) being associated with an authorizer (130) and further configured and arranged to receive an authorization request (310) and to provide a corresponding authorization response (320);
the electronic transaction network (200, 201) further comprising:
- a validation application (300b), associated with an integrity controller (110), and further configured and arranged to receive a forwarded authorization request (315) and to generate an expected authorization response (330);
- an application integrity detector (400), associated with the integrity controller (110), further configured and arranged to receive a forwarded authorization response (325) and the expected authorization request (330);
the method comprising:
- receiving at the electronic transaction application (300a) the authorization request (310), forwarding the authorization request (310) as the forwarded authorization request (315) to the validation application (330), and providing the authorization response (320) to a provider of the authorization request (310);
- receiving at the validation application (300b) the forwarded authorization request (315) and forwarding the expected authorization response (330) to the application integrity detector (400);
- forwarding the authorization response (320) as the forwarded authorization response (325) to the application integrity detector (400); and
- using the application integrity detector (330) to determine a degree of similarity between the forwarded authorization response (325) and the expected authorization response (330).

2. The computer-implemented method according to claim 1, wherein the validation application (300b) is substantially the same as the electronic transaction application (300a).

3. The computer-implemented method according to claim 1 or claim 2, wherein the expected authorization response (330) is substantially the same as the corresponding authorization response (320).

4. The computer-implemented method according to any preceding claim, wherein the forwarded authorization request (315) is substantially the same as the authorization request (310).

5. The computer-implemented method according to any preceding claim, wherein the forwarded authorization response (325) is substantially the same as the authorization response (320).

6. The computer-implemented method according to any preceding claim, wherein the authorization request (310) is forwarded as the forwarded authorization request (315) after providing the authorization response (320).

7. The computer-implemented method according to any preceding claim, wherein the authorization response (320) is forwarded as the forwarded authorization response (325) after providing the authorization response (320).

8. The computer-implemented method according to any preceding claim, wherein the authorization request (310) is forwarded as the forwarded authorization request (315) by the authorizer (130) and/or a provider (140, 440) of the authorization request (310).

9. The computer-implemented method according to any preceding claim, wherein the authorization response (320) is forwarded as the forwarded authorization response (320) by the authorizer (130) and/or a receiver (140, 440) of the authorization response (320).

10. The computer-implemented method according to any preceding claim, wherein the authorizer of electronic transactions (130) is selected from the one or more of the following: an Issuer (110), a Merchant (140, 440), an Acquirer (130), a network provider (200, 201), a Scheme provider (110).

11. The computer-implemented method according to any preceding claim, wherein the integrity controller (110) is selected from the one or more of the following: an Issuer (110), an Acquirer (130), a network provider (200, 201), a Scheme provider (110).

12. The computer-implemented method according to any preceding claim, wherein the authorization request (310) is provided by a Merchant (140, 440) or a Consumer.

13. The computer-implemented method according to any preceding claim, wherein the authorization request (310) is provided by the integrity controller (110).

14. The computer-implemented method according to claim 13, wherein the authorization request (310) is forwarded as the forwarded authorization request (315) by the authorizer (130) and/or the integrity controller (110).

15. The computer-implemented method according to claim 13 or claim 14, wherein the authorization response (320) is forwarded as the forwarded authorization response (320) by the authorizer (130) and/or the integrity controller (110).

16. The computer-implemented method according to any preceding claim, wherein the method further comprises:
providing the degree of similarity to one or more of the following:
- an authorizer (130), an Issuer (110), a Merchant (140, 440), an Acquirer (130), a Consumer, a network provider (200, 201), a Scheme provider (110), and any combination thereof.

17. The computer-implemented method according to any of the preceding claims, wherein one or more requests (310, 315) and/or responses (320, 325, 330) comply with:
- an ISO 8583 standard, an ISO 7812 standard, an EMV standard or protocol, a 3D Secure (3DS) standard or protocol, and any combination thereof.
